Europäisches Patentamt

European Patent Office

Office européen des brevets

(19)

(11) Numéro de publication : **0 132 014**
**B1**

(12) **FASCICULE DE BREVET EUROPÉEN**

(45) Date de publication du fascicule du brevet :
04.03.87

(21) Numéro de dépôt : 84201058.9

(22) Date de dépôt : 16.07.84

(51) Int. Cl.⁴ : **C 01 G   9/06, C 01 G  11/00,
C 22 B   3/00, C 22 B  19/26,
C 22 B  17/04**

(54) Procédé pour défluorer une solution acide de sulfate.

(30) Priorité : 19.07.83 LU 84923

(43) Date de publication de la demande :
23.01.85 Bulletin 85/04

(45) Mention de la délivrance du brevet :
04.03.87 Bulletin 87/10

(84) Etats contractants désignés :
BE DE FR IT

(56) Documents cités :
AU-B-   434 843
US-A- 3 652 264
US-A- 3 800 024
CHEMICAL ABSTRACTS, vol. 95, 1981, page 131, no.
45456f, Columbus, Ohio, US
CHEMICAL ABSTRACTS, vol. 83, 1975, no. 62792g,
Columbus, Ohio, US; V.P. POPOV et al.: "Removal of
heavy metal impurities from zinc and cadmium sulfates"
CHEMICAL ABSTRACTS, vol. 87, 1977, page 362, no.
11427s, Columbus, Ohio, US
CHEMICAL ABSTRACTS, vol. 89, 1978, page 285, no.
94693r, Columbus, Ohio, US
CHEMICAL ABSTRACTS, vol. 99, 1983, no. 200077m,
Columbus, Ohio, US
CHEMICAL ABSTRACTS, vol. 87, 1977, page 259, no.
206078m, Columbus, Ohio, US
CHEMICAL ABSTRACTS, vol. 89, 1978, page 277, no.
79834u, Columbus, Ohio, US
CHEMICAL ABSTRACTS, vol. 78, 1973, page 141, no.
86695a, Columbus, Ohio, US

(73) Titulaire : **METALLURGIE HOBOKEN-OVERPELT**
**Société anonyme dite:**
**A. Greinerstraat, 14**
**B-2710 Hoboken (BE)**

(72) Inventeur : **Detournay, Jacquy J.C.**
**Tennislaan 2**
**B-3583 Overpelt (BE)**
Inventeur : **Sterckx, Jozef V.M.**
**Berkendreef 5**
**B-3580 Neerpelt (BE)**

(74) Mandataire : **Saelemaekers, Juul et al**
**METALLURGIE HOBOKEN-OVERPELT A. Greiner-**
**straat 14**
**B-2710 Hoboken (BE)**

Jouve, 18, rue St-Denis, 75001 Paris, France

## Description

La présente invention se rapporte à un procédé pour séparer des ions F⁻ d'une solution aqueuse acide d'au moins un sulfate choisi parmi $ZnSO_4$, $NiSO_4$, $CdSO_4$, $MnSO_4$ et $MgSO_4$.

Le procédé de l'invention est particulièrement intéressant pour défluorer une solution acide de sulfate de zinc.

Il est bien connu que dans le cadre de l'extraction du zinc par voie électrolytique la présence de fluor, à une concentration de quelques dizaines de milligrammes par litre, dans les solutions de sulfate de zinc est hautement préjudiciable à la bonne marche des opérations, notamment quant à la nature et l'aspect du dépôt cathodique, le rendement faradique et les phénomènes de corrosion. Il est donc hautement souhaitable d'envoyer à l'électrolyse du zinc des solutions n'ayant que quelques milligrammes par litre de fluor.

Or, les solutions acides de lixiviation des minerais de zinc contiennent toujours des quantités significatives d'ions qui forment des complexes stables avec les ions F⁻, tels que des ions $Fe^{3+}$ et $Sn^{2+}$. Dans ces conditions la présence de cations tels que $Ca^{2+}$ et $Ba^{2+}$ dont les fluorures présentent un faible produit de solubilité ne permet pas de limiter la teneur en ions F⁻ à quelques milligrammes par litre, même dans des conditions favorables d'acidité compatibles avec la présence d'ions $Zn^{2+}$. C'est ainsi qu'en neutralisant une solution acide de $ZnSO_4$ contenant plus d'environ 0,5 g/l de F⁻ par du $CaCO_3$ jusqu'à pH 4,5-4,6 (où le zinc est encore soluble) on obtient une solution à environ 0,5 g/l de F⁻, quelle que soit la concentration initiale en fluor.

Jusqu'à présent on était obligé de défluorer par voie thermique les minerais de zinc riches en fluor, avant de les envoyer à la lixiviation.

La présente invention a pour but de fournir un procédé tel que défini ci-dessus, permettant d'obtenir une solution à faible teneur en F⁻.

Selon l'invention, on ajoute au besoin des ions $Al^{3+}$ et $PO_4^{3-}$ à la solution de manière que celle-ci contienne au moins environ 1 g/l d'$Al^{3+}$ et au moins environ 3,5 g/l de $PO_4^{3-}$, on neutralise ensuite la solution jusqu'à un pH supérieur à 4 et inférieur à celui qui provoque une précipitation d'au moins 10 % du Zn, Ni, Cd, Mn et/ou Mg sous la forme d'hydroxyde et/ou de sel basique, en produisant ainsi un précipité fluoré, et on sépare le précipité de la solution, en produisant ainsi une solution partiellement défluorée.

Il est à noter qu'on connaît déjà des procédés pour défluorer des solutions de sulfate de sodium, des eaux de source et des eaux résiduaires, suivant lesquels on ajoute à la solution des ions $Al^{3+}$ et on neutralise ensuite jusqu'à un pH d'au moins 5,5, en produisant ainsi un précipité fluoré qu'on sépare de la solution (voir Chemical Abstracts, vol. 95, 1981, p. 131, résumé 45456f ; vol. 87, 1977, p. 362, résumé 11427s ; vol. 99, 1983, p. 308, résumé 200077m ; vol. 87, 1977, p. 259, résumé 206078m ; vol. 89, 1978, p. 277, résumé 79834u ; voir également la demande de brevet japonais publié n° 10553/1978). Ces procédés connus ne conviennent pas pour défluorer des solutions de sulfate de zinc, parce qu'il y a déjà une précipitation substantielle de zinc à pH 5,5.

Dans le procédé de l'invention, il est nécessaire d'opérer avec au moins environ 1 g/l d'$Al^{3+}$ et au moins environ 3,5 g/l de $PO_4^{3-}$ pour obtenir une défluoration sensible de la solution. Pour des raisons économiques il est recommandé d'opérer avec moins d'environ 5 g/l d'$Al^{3+}$ et moins d'environ 17,5 g/l de $PO_4^{3-}$.

On obtient de très bons résultats, lorsque la concentration en ions $Al^{3+}$ de la solution est comprise entre environ 2,5 et 3,5 g/l et celle en ions $PO_4^{3-}$ entre environ 8,75 et 12,25 g/l, la solution contenant préférentiellement des quantités stœchiométriques de $Al^{3+}$ et $PO_4^{3-}$.

Il est nécessaire de neutraliser la solution jusqu'à un pH supérieur à 4 pour obtenir une défluoration satisfaisante de la solution. Il est évident que le pH qui provoque une précipitation substantielle, par exemple une précipitation d'au moins 10 % du Zn, Ni, Cd, Mn et/ou Mg sous la forme d'hydroxyde et/ou de sel basique dépend en premier lieu de la composition de la solution. Ce pH dépend également des conditions de· neutralisation : dilution de l'agent de neutralisation, vitesse d'ajoute de l'agent de neutralisation, etc. Il est également évident que ce pH peut être facilement déterminé par voie expérimentale pour chaque cas particulier. Normalement ce pH est d'environ 5 pour des solutions de $ZnSO_4$, d'environ 5,5 pour des solutions de $NiSO_4$, d'environ 6,5 pour des solutions de $CdSO_4$ et de $MnSO_4$, et d'environ 7,5 pour des solutions de $MgSO_4$. Lorsqu'on traite des solutions de $ZnSO_4$, on obtient les meilleurs résultats en neutralisant jusqu'à un pH compris entre environ 4,3 et 4,7.

Quoiqu'on pourrait utiliser un neutralisant quelconque tel que NaOH ou KOH, on neutralise avantageusement avec du CaO, $Ca(OH)_2$ et/ou $CaCO_3$, ceux-ci étant des réactifs bon marché et ne contaminant pas la solution, le calcium étant précipité comme sulfate.

On neutralise avantageusement à une température comprise entre 45 et 90 °C. En dessous de 45 °C la filtrabilité du précipité devient mauvaise et au-dessus de 90 °C la défluoration de la solution devient sensiblement moins bonne. On obtient les meilleurs résultats en neutralisant à une température allant de 50 à 55 °C.

Lorsque la solution partiellement défluorée susdite a une teneur en ions F⁻ encore trop élevée, il faut acidifier cette solution et traiter la solution acidifiée par le procédé de l'invention. Il suffit d'acidifier

2

jusqu'à un pH où les concentrations précitées en Al³⁺ et PO₄³⁻ sont possibles. Il est évident qu'on peut en une seule opération acidifier et ajuster la concentration en Al³⁺ et/ou PO₄³⁻, par exemple en ajoutant de l'acide phosphorique.

Lorsqu'on traite la solution acidifiée susdite par le procédé de l'invention, on obtient de nouveau un précipité fluoré. Il est alors indiqué d'utiliser ce second précipité fluoré pour ajuster la teneur en Al³⁺ et PO₄³⁻ d'une solution acide de sulfate qui doit encore être défluorée par le procédé de l'invention.

Il peut donc être nécessaire d'effectuer une double défluoration selon le procédé de l'invention pour obtenir une solution à moins de 0,005 g/l de F⁻. Dans la première étape de cette double défluoration, on dissout dans la solution à défluorer le précipité fluoré obtenu dans la seconde étape d'une opération antérieure de double défluoration, et on obtient après neutralisation un précipité très fluoré, que l'on jette, et une solution partiellement défluorée. Dans la seconde étape on acidifie cette solution partiellement défluorée et on ajuste sa teneur en Al³⁺ et PO₄³⁻, et on l'obtient après neutralisation un précipité peu fluoré (le second précipité fluoré susdit), qu'on utilisera dans la première étape d'une opération postérieure de double défluoration, et une solution pratiquement défluorée.

Lorsque la teneur en ions en F⁻ de la solution à défluorer n'est pas supérieure à environ 0,5 g/l, une double défluoration selon le procédé de l'invention suffit pour obtenir une solution à moins de 0,005 g/l de F⁻. Lorsque la teneur en ions F⁻ de la solution à défluorer est supérieur à environ 0,5 g/l, par exemple de l'ordre de 1 g/l, une double défluoration selon le procédé de l'invention ne pourrait plus suffir pour obtenir une solution à moins de 0,005 g/l de F⁻. Dans ce cas-ci il pourrait être nécessaire de procéder à une triple défluoration selon le procédé de l'invention, ce qui coûterait cher en réactifs. Il n'est donc pas indiqué de traiter par le procédé de l'invention des solutions ayant une teneur en ions F⁻ supérieure à environ 0,5 g/l. Si on doit traiter de telles solutions, on va d'abord ramener leur teneur en ions F⁻ à environ 0,5 g/l en les neutralisant par un neutralisant calcifère, par exemple CaCO₃, jusqu'à un pH compris entre 4 et 5, de préférence entre 4,5 et 4,6 (voir plus haut), avant de les soumettre au procédé de l'invention.

## Exemple 1

Une série de 17 solutions de ZnSO₄ ayant diverses teneurs en Al³⁺, PO₄³⁻ et F⁻ sont neutralisées par du CaCO₃ jusqu'à pH 4,5.

Le tableau ci-après donne pour chaque solution :

la teneur initiale en Al³⁺ en g/l.

la forme sous laquelle PO₄³⁻ est présent dans la solution initiale et le rapport molaire PO₄³⁻ : Al³⁺ dans la solution.

la température de neutralisation en °C.

la teneur initiale en F⁻ en g/l.

la teneur finale en F⁻ en g/l.

(Voir Tableau p. 4)

Du tableau ci-dessus il ressort ce qui suit.

Dans une solution contenant des ions PO₄³⁻ et exempte d'ions Al³⁺ (solution 1) on obtient une défluoration qui n'est pas meilleure que celle obtenue en neutralisant par du CaCO₃ des solutions exemptes d'Al³⁺ (voir plus haut).

Dans une solution contenant des ions Al³⁺ et PO₄³⁻ on obtient une défluoration, qui est substantiellement supérieure à celle obtenue dans une solution contenant des ions Al³⁺ et exempte d'ions PO₄³⁻ (solution 16 versus solution 2). La forme sous laquelle PO₄³⁻ est présent dans la solution ne joue aucun rôle (solutions 3, 4 et 11). L'effet bénéfique des ions PO₄³⁻ diminue lorsque le rapport molaire PO₄³⁻ : Al³⁺ devient plus petit (solutions 8-10). La défluoration est moins bonne à haute température (solutions 11-12). En extrapolant les résultats obtenus avec les solutions 4-7, on verra qu'à partir d'une concentration en Al³⁺ de 1 g/l et une concentration équivalente en PO₄³⁻ on peut s'attendre à une défluoration sensible.

Il est possible d'obtenir au départ d'une concentration initiale en F⁻ d'environ 0,5 g/l, c'est-à-dire celle obtenue en neutralisant par du CaCO₃ des solutions exemptes d'Al³⁺, une concentration finale en F⁻ de moins de 0,005 g/l par double défluoration en utilisant une concentration en Al³⁺ de 3 g/l et une concentration équivalente en PO₄³⁻ (solutions 14 et 17).

Il est à noter que le précipité fluoré formé dans la solution contenant des ions Al³⁺ et exempte d'ions PO₄³⁻ est difficilement filtrable contrairement à ceux formés dans les solutions contenant à la fois des ions Al³⁺ et PO₄³⁻.

## Exemple 2

Un litre d'une solution de sulfate de zinc de pH 2 et contenant en g/l ; 93,4 Zn, 0,1 Cu, 0,1 Cd, 0,1 Sn, 0,5 Al, 2,4 Fe, 1,84 F, est neutralisé à 50 °C jusqu'à pH 4,5 par ajoute de 5 g de CaCO₃. Il y a formation d'un précipité fluoré.

Tableau

| | $Al^{3+}$ en g/l | $PO_4^{3-}$ (a) forme (b) $PO_4^{3-}$ : $Al^{3+}$ | Temp. °C | $F^-$ initial en g/l | $F^-$ final en g/l |
|---|---|---|---|---|---|
| 1 | – | (a) $H_3PO_4$ (équivalent à 3 g/l $Al^{3+}$) | 50 | 0,948 | > 0,400 |
| 2 | 3 | | 50 | 0,184 | 0,072 |
| 3 | 5 | (a) sel de $Na^+$ (b) 1 : 1 | 50 | 0,776 | 0,020 |
| 4 | 5 | (a) $H_3PO_4$ (b) 1 : 1 | 50 | 0,776 | 0,018 |
| 5 | 4 | (a) $H_3PO_4$ (b) 1 : 1 | 50 | 0,736 | 0,033 |
| 6 | 3 | (a) $H_3PO_4$ (b) 1 : 1 | 50 | 0,736 | 0,044 |
| 7 | 2 | (a) $H_3PO_4$ (b) 1 : 1 | 50 | 0,736 | 0,120 |
| 8 | 5 | (a) $H_3PO_4$ (b) 1 : 1 | 50 | 1,368 | 0,172 |
| 9 | 5 | (a) $H_3PO_4$ (b) 4 : 10 | 50 | 1,368 | 0,311 |
| 10 | 5 | (a) $H_3PO_4$ (b) 2 : 10 | 50 | 1,368 | 0,408 |
| 11 | 5 | (a) sel de $Na^+$ (b) 1 : 1 | 50 | 0,776 | 0,017 |
| 12 | 5 | (a) sel de $Na^+$ (b) 1 : 1 | 90 | 0,776 | 0,080 |
| 13 | 3 | (a) $H_3PO_4$ (b) 1 : 1 | 50 | 1,44 | 0,100 |
| 14 | 3 | (a) $H_3PO_4$ (b) 1 : 1 | 50 | 0,535 | 0,030 |
| 15 | 3 | (a) sel d'$Al^{3+}$ (b) 1 : 1 | 50 | 0,530 | 0,025 |
| 16 | 3 | (a) $H_3PO_4$ (b) 1 : 1 | 50 | 0,184 | 0,012 |
| 17 | 3 | (a) $H_3PO_4$ (b) 1 : 1 | 50 | 0,030 | < 0,005 |

Après séparation du précipité, on obtient une solution à 0,5 g/l de F. A cette solution on ajoute 65 ml d'une solution de sulfate d'aluminium à 40 g/l d'Al et 7,9 g de $P_2O_5$ sous la forme d'acide orthophosphorique. L'ensemble est neutralisé à 50 °C jusqu'à pH 4,5 par addition de 50 g de $CaCO_3$. Il y a formation d'un précipité fluoré.

Après séparation du précipité, on obtient une solution contenant en g/l : 91 Zn, 0,1 Cu, 0,1 Al, <0,01 $PO_4^{3-}$ et <0,03 F. Le précipité contient en % : 16,4 Ca, 2,8 Al, 9,2 $PO_4^{3-}$, 0,4 F et 5 Zn.

## Exemple 3

On opère de la même façon que dans l'exemple 2, mais au lieu d'effectuer la seconde neutralisation à 50 °C, on l'effectue à 90 °C.

La solution finale contient maintenant 0,05 g/l de F, mais la filtrabilité du précipité est meilleure que dans l'exemple 2.

## Exemple 4

A un litre d'une solution de $ZnSO_4$ de pH 4,5 contenant en g/l : 91 Zn, 0,045 F, 0,1 Cu, 0,1 Cd, 0,1 Al, on ajoute 75 ml d'une solution de sulfate d'aluminium à 40 g/l d'Al et 7,9 g de $P_2O_5$ sous la forme d'acide orthophosphorique. L'ensemble est neutralisé à 50 °C jusqu'à pH 4,5 par addition de 50 g de $CaCO_3$. Il y a formation d'un précipité fluoré.

Après séparation du précipité, on obtient une solution à 90 g/l de Zn, < 0,005 g/l de F, 0,1 g/l d'Al et < 0,01 g/l de $PO_4^{3-}$.

## Exemple 5

A un litre d'une solution de $ZnSO_4$ de pH 4,5 contenant en g/l : 93,6 Zn, 0,5 F, 0,1 Cu, 0,1 Cd, 0,1 Sn, 0,5 Al on ajoute 10 g de $H_2SO_4$ concentré et le précipité obtenu dans l'exemple 4. L'ensemble est neutralisé à 50 °C jusqu'à pH 4,5 par addition de 22 g de $CaCO_3$.

La solution neutralisée contient en g/l : 91 Zn, < 0,03 F, 0,1 Al, 0,1 Cu, 0,1 Cd, 0,1 Sn.

## Revendications

1. Procédé pour séparer des ions $F^-$ d'une solution aqueuse acide d'au moins un sulfate choisi parmi $ZnSO_4$, $NiSO_4$, $CdSO_4$, $MnSO_4$ et $MgSO_4$, caractérisé en ce qu'on ajoute au besoin des ions $Al^{3+}$ et $PO_4^{3-}$ à la solution de manière que celle-ci contienne au moins environ 1 g/l d'$Al^{3+}$ et au moins environ 3,5 g/l de $PO_4^{3-}$, on neutralise ensuite la solution jusqu'à un pH supérieur à 4 et inférieur à celui qui provoque une précipitation d'au moins 10 % du Zn, Ni, Cd, Mn et/ou Mg sous la forme d'hydroxyde et/ou de sel basique, en produisant ainsi un précipité fluoré, et on sépare le précipité de la solution, en produisant ainsi une solution partiellement défluorée.

2. Procédé selon la revendication 1, caractérisé en ce qu'on ajuste la concentration en ions $Al^{3+}$ de la solution à une valeur inférieure à environ 5 g/l et celle en ions $PO_4^{3-}$ à une valeur inférieure à environ 17,5 g/l.

3. Procédé selon la revendication 2, caractérisé en ce qu'on ajuste la concentration en ions $Al^{3+}$ de la solution à une valeur comprise entre environ 2,5 et 3,5 g/l et celle en ions $PO_4^{3-}$ à une valeur comprise entre environ 8,75 et 12,25 g/l.

4. Procédé selon la revendication 1, 2 ou 3, caractérisé en ce qu'on ajuste la concentration en ions $PO_4^{3-}$ de la solution de manière que celle-ci contienne des quantités stœchiométriques d'ions $Al^{3+}$ et $PO_4^{3-}$.

5. Procédé selon la revendication 1, 2, 3 ou 4, caractérisé en ce que, dans le cas où la solution contient du sulfate de zinc, on neutralise jusqu'à un pH inférieur à environ 5.

6. Procédé selon la revendication 5, caractérisé en ce qu'on neutralise jusqu'à un pH compris entre environ 4,3 et 4,7.

7. Procédé selon l'une quelconque des revendications 1-6, caractérisé en ce qu'on neutralise par du CaO, $Ca(OH)_2$ et/ou $CaCO_3$.

8. Procédé selon l'une quelconque des revendications 1-7, caractérisé en ce qu'on neutralise à une température comprise entre environ 45 et 90 °C.

9. Procédé selon la revendication 8, caractérisé en ce qu'on neutralise à une température allant de 50 à 55 °C.

10. Procédé selon l'une quelconque des revendications 1-9, caractérisé en ce qu'on réacidifie la solution partiellement défluorée et on traite cette solution réacidifiée par le procédé des revendications 1-9, en produisant ainsi un second précipité fluoré et une solution pratiquement défluorée.

11. Procédé selon la revendication 10, caractérisé en ce qu'on dissout le second précipité fluoré dans une solution acide de sulfate à défluorer par le procédé des revendications 1-9.

12. Procédé selon l'une quelconque des revendications 1-11, caractérisé en ce qu'on utilise en tant que solution acide de sulfate à défluorer une solution ayant une concentration en ions $F^-$ égale ou inférieure à environ 0,5 g/l.

13. Procédé selon la revendication 12, caractérisé en ce qu'on prépare la solution ayant une concentration en ions $F^-$ égale à environ 0,5 g/l à partir d'une solution ayant une concentration plus élevée en ions $F^-$, en neutralisant cette dernière solution par un neutralisant calcifère jusqu'à un pH compris entre 4 et 5 en formant ainsi un précipité fluoré, en séparant ce précipité de la solution et en acidifiant la solution, dont on a séparé le précipité.

## Claims

1. A process for separating $F^-$ ions from an acid aqueous solution of at least one sulphate chosen among $ZnSO_4$, $NiSO_4$, $CdSO_4$, $MnSO_4$ and $MgSO_4$, characterized in that $Al^{3+}$ and $PO_4^{3-}$ ions are, if necessary, added to the solution so that the latter contains at least about 1 g/l of $Al^{3+}$ and at least about 3.5 g/l of $PO_4^{3-}$, the solution is then neutralized up to a pH higher than 4 and lower than that one that causes a precipitation of at least 10 % of the Zn, Ni, Cd, Mn and/or Mg in the form of hydroxyde and/or basic salt, thereby producing a fluorinated precipitate, and the precipitate is separated from the solution, thereby producing a partially defluorinated solution.

2. Process according to claim 1, characterized in that the $Al^{3+}$ ion concentration is adjusted to a value of less than about 5 g/l and the $PO_4^{3-}$ ion concentration to a value of less than about 17.5 g/l.

3. A process according to claim 2, characterized in that the $Al^{3+}$ ion concentration is adjusted to a value of between about 2.5 and 3.5 g/l and the $PO_4^{3-}$ ion concentration to a value of between about 8.75 and 12.25 g/l.

4. A process according to claim 1, 2 or 3, characterized in that the $PO_4^{3-}$ ion concentration of the solution is adjusted so that the latter contains stoechiometric amounts of $Al^{3+}$ and $PO_4^{3-}$ ions.

5. A process according to claims 1, 2, 3 or 4, characterized in that neutralization is carried out up to a pH lower than about 5, when the solution contains zinc sulphate.

6. A process according to claim 5, characterized in that neutralization is carried out up to a pH of between about 4.3 and 4.7.

7. A process according to any of the claims 1-6, characterized in that neutralization is carried out by means of CaO, Ca(OH)$_2$ and/or CaCO$_3$.

8. A process according to any of the claims 1-7, characterized in that neutralization is carried out at a temperature of between about 45 and 90 °C.

9. A process according to claim 8, characterized in that neutralization is carried out at a temperature ranging from 50 to 55 °C.

10. A process according to any of the claims 1-9, characterized in that the partially defluorinated solution is reacidified and this reacidified solution is treated by the process of the claims 1-9, thereby producing a second fluorinated precipitate and a practically defluorinated solution.

11. A process according to claim 10, characterized in that the second fluorinated precipitate is dissolved in an acid sulphate solution to be defluorinated by the process of claims 1-9.

12. A process according to any of the claims 1-11, characterized in that a solution with a $F^-$ ion concentration equal or lower than about 0.5 g/l is used as the acid sulphate solution to be defluorinated.

13. A process according to claim 12, characterized in that the solution with a $F^-$ ion concentration equal to about 0.5 g/l is prepared from a solution with a higher $F^-$ ion concentration by neutralizing this latter solution with a calciferous neutralizer up to a pH of between 4 and 5 thereby forming a fluorinated precipitate, by separating this precipitate from the solution and by acidifying the solution, from which the precipitate was separated.

**Patentansprüche**

1. Verfahren zum Trennen von $F^-$-Ionen aus einer wäßrigen sauren Lösung, die mindestens ein Sulfat der Verbindungen ZnSO$_4$, NiSO$_4$, CdSO$_4$, MnSO$_4$ und MgSO$_4$ enthält, dadurch gekennzeichnet, daß man, soweit erforderlich, $Al^{3+}$-Ionen und $PO_4^{3-}$-Ionen der Lösung in der Weise zufügt, daß die mindestens etwa 1 g/l $Al^{3+}$ und mindestens etwa 3,5 g/l $PO_4^{3-}$ enthält, daß man dann die Lösung bis zu einem pH-Wert neutralisiert, der oberhalb von 4 und unterhalb von dem Wert liegt, der eine Ausfällung von mindestens 10 % des Zn, Ni, Cd, Mn und/oder Mg in Form des Hydroxids und/oder basischen Salzes hervorruft, wobei man einen fluorhaltigen Niederschlag herstellt und daß man den Niederschlag von der Lösung trennt, wodurch man eine partiell defluorierte Lösung erhält.

2. Verfahren nach Anspruch 1, dadurch gekennzeichnet, daß man die Konzentration der $Al^{3+}$-Ionen in der Lösung auf einen Wert unterhalb von etwa 5 g/l und die der $PO_4^{3-}$-Ionen auf einen Wert unterhalb von etwa 17,5 g/l einstellt.

3. Verfahren nach Anspruch 2, dadurch gekennzeichnet, daß man die Konzentration der $Al^{3+}$-Ionen auf einen Wert zwischen etwa 2,5 und 3,5 g/l und die der $PO_4^{3-}$-Ionen auf einen Wert zwischen etwa 8,75 und 12,25 g/l einstellt.

4. Verfahren nach Anspruch 1, 2 oder 3, dadurch gekennzeichnet, daß man die Konzentration der $PO_4^{3-}$-Ionen in der Lösung in der Weise einstellt, daß die Lösung stöchiometrische Mengen der Ionen $Al^{3+}$ und $PO_4^{3-}$ enthält.

5. Verfahren nach Anspruch 1, 2, 3 oder 4, dadurch gekennzeichnet, daß man, wenn die Lösung Zinksulfat enthält, bis zu einem pH-Wert unterhalb von etwa 5 neutralisiert.

6. Verfahren nach Anspruch 5, dadurch gekennzeichnet, daß man bis zu einem pH-Wert zwischen etwa 4,3 und 4,7 neutralisiert.

7. Verfahren nach einem der Ansprüche 1 bis 6, dadurch gekennzeichnet, daß man mittels CaO, Ca(OH)$_2$ und/oder CaCO$_3$ neutralisiert.

8. Verfahren nach einem der Ansprüche 1 bis 7, dadurch gekennzeichnet, daß man bei einer Temperatur zwischen etwa 45 und 90 °C neutralisiert.

9. Verfahren nach Anspruch 8, dadurch gekennzeichnet, daß man bei einer Temperatur von 50 bis 55 °C neutralisert.

10. Verfahren nach einem der Ansprüche 1 bis 9, dadurch gekennzeichnet, daß man die partiell defluorierte Lösung wieder ansäuert und diese erneut angesäuerte Lösung nach dem Verfahren der Ansprüche 1 bis 9 behandelt, wodurch man einen zweiten fluorhaltigen Niederschlag und eine praktisch defluorierte Lösung erhält.

11. Verfahren nach Anspruch 10, dadurch gekennzeichnet, daß man den zweiten fluorhaltigen Niederschlag in einer sauren Sulfatlösung, die nach dem Verfahren der Ansprüche 1 bis 9 zu defluorieren ist, löst.

12. Verfahren nach einem der Ansprüche 1 bis 11, dadurch gekennzeichnet, daß man als zu defluorierende saure Sulfatlösung eine Lösung verwendet, deren Konzentration an $F^-$-Ionen gleich oder niedriger als etwa 0,5 g/l ist.

**0 132 014**

13. Verfahren nach Anspruch 12, dadurch gekennzeichnet, daß man eine Lösung mit einer F⁻-Ionenkonzentration gleich etwa 0,5 g/l aus einer Lösung mit einer höheren F⁻-Ionenkonzentration herstellt, indem man letztere Lösung mittels eines kalkhaltigen Neutralisationsmittels bis zu einem pH-Wert zwischen 4 und 5 neutraliseirt, so daß ein fluorhaltiger Niederschlag entsteht, daß man dann den Niederschlag von der Lösung trennt und die vom Niederschlag getrennte Lösung ansäuert.

7